# EUROPEAN PATENT SPECIFICATION

(11) **EP 1 518 312 B1**
(45) Date of publication and mention of the grant of the patent: **25.03.2009**
(21) Application number: 03732146.0
(22) Date of filing: 01.07.2003
(51) Int. Cl.: H02K 1/14, H02K 33/16

(54) **PROCESS FOR FORMING THE STATOR OF A LINEAR MOTOR, ANNULAR STACK OF LAMINATION ELEMENTS AND STATOR FOR AN ELECTRIC MOTOR**
VERFAHREN ZUR FORMUNG DES STATORS EINES LINEARMOTORS, RINGFÖRMIGER STAPEL VON BLECHPAKET-ELEMENTEN UND STATOR FÜR EINEN ELEKTRISCHEN MOTOR
PROCEDE DE FORMATION DU STATOR D'UN MOTEUR LINEAIRE, D'UN EMPILEMENT ANNULAIRE D'ELEMENTS DE LAMINAGE ET D'UN STATOR POUR UN MOTEUR ELECTRIQUE

(30) Priority: 03.07.2002 BR 0203507
(43) Date of publication of application: 30.03.2005
(73) Proprietor: WHIRLPOOL S.A., 04578-000 São Paulo SP (BR)
(72) Inventor: STARKE, Orlando, 89218-490 JOINVILLE - SC (BR); VOLLRATH, Ingwald, 89239-100 JOINVILLE - SC (BR); LINDROTH JUNIOR, Landoaldo, Victor, 89201-810 JOINVILLE - SC (BR); DOKONAL, Luiz, Von, 89204-500 JOINVILLE - SC (BR)
(74) Representative: Geyer, Fehners & Partner
(86) International application number: PCT/BR2003/000085
(87) International publication number: WO 2004/006413

(56) References cited:
- US-A- 5 318 412
- US-A- 5 945 748
- US-A- 6 060 810
- US-A- 6 077 054
- PATENT ABSTRACTS OF JAPAN vol. 2002, no. 10, 10 October 2002 (2002-10-10) -& JP 2002 171740 A (LG ELECTRONICS INC), 14 June 2002 (2002-06-14)

## Description

### Field of the Invention

The present invention refers to a process for forming the stator of a linear motor and, more particularly, for the assembly of its internal annular stack of metallic laminations that will carry the coil of said linear motor.

### Background of the Invention

In the manufacture of a hermetic compressor of refrigeration with a linear motor, there are several components that form the compressor, such as the linear motor. This type of motor is formed of an annular stack of metallic laminations of the stator of the linear motor and around which is wound a copper wire, forming the induction coil of the motor.

The linear motor further presents another assembly of metallic laminations, also forming a radial stack known as external annular stack and which defines, with the stator, an annular space within which moves the magnetic impeller, whose function is to produce the linear movement of the piston of the compressor, which allows said piston to carry out the compression operation inside a cylinder of the compressor.

There are known processes which define configurations for a linear stator using entire laminations in the manufacture of the linear stators presenting an axially asymmetric topology with laminations of the "C" or "U" types, or in the form of a daisy, and which carry magnets in the movable part (US4,602,174, US4,346,318, US4,349,757, US4,454,426, US4,623,08). Such solutions present, regarding manufacturing aspects, several difficulties, such as: lodging the coil in the annular structure of laminations; insulating the coil from the lamination structure, according to international electrical insulation rules; fixation of the coil and/or the coil windings, which are required to be rigidly affixed, considering the high forces applied thereon, due to the high acceleration resulting from the reciprocating movement according to the frequency of the power system.

US 5,318,412 discloses a construction of a linear motor provided with two-piece laminations, being laterally seated in relation to each other, in order to define respective lamination stack portions to be affixed to each other to form the stator. One of the lamination portions is provided with a recess in a respective seating region to receive a complementary projection defined in the other lamination portion, the lamination portions being fixed to each other through screws. This construction presents a magnetic core of the motor as a massive steel, which allows that the fixation between the lamination portions is obtained through screws. However, this fixation solution does not apply to such motor constructions in which the motor magnetic core is constituted by steel elements and in which the displacer which should be formed by magnetic elements, oscillates in the external diameter of the stator of the motor. In order to obtain a high efficiency in this kind of linear motor the lamination elements of the external diameter should be substantially symmetrically spaced. If the lamination elements which are circularly distributed, are agglutinated, as to form e. g. spaces in some radial parts to the passage of fixation elements as screws, the spaces should originate reluctance to the magnetic field and also saturate the lamination elements concentrated there. In other words it would originate a small strength and, consequently, reduce the efficiency of the motor.

US 6,077,054 presents a linear motor topology in which the magnets are displaced in the region of the internal diameter of the stator. In view thereof, the lamination elements forming the annular stack need to present an internal circular contour, but do not need equally spaced external ends, in order to obtain a substantially homogeneous external cylindrical surface to the annular stack. This prior art solution presents its lamination stack formed in order that the end radial extensions of each lamination element are provided to define the internal lateral surface of the lamination stack, while the axial extension of each lamination element is provided in order to define a respective part of the external contour of the lamination stack. The external lateral surface is formed by a plurality of blocks of laminations disposed angularly away from each other, defining thus a discontinuous lateral surface of lamination stack.

### Objects of the Invention

Thus, it is an object of the present invention to provide a process for forming the stator of a linear motor, which facilitates the assembly of the stator, particularly the coil therewithin, allowing maximizing the amount of windings of the copper wire in the interior of said stator and further allowing the fixation of the metallic laminations of the formed lamination stack to present sufficient strength to resist the efforts applied to the stator during the operation of the linear motor.

Another object of the present invention is to provide a process for forming the stator, such as mentioned above, which allows the coil of said stator to be electrically insulated in an easy and adequate manner.

### Summary of the Invention

These and other objectives are achieved by a process for forming the stator of a linear electric motor said stator comprising an annular stack of lamination elements according to Claim 1.

The present invention further presents an annular stack of lamination elements of the type that forms the stator of a linear electric motor and comprising a plurality of lamination elements seated laterally to each other, according to Claim 11.

The present invention presents some advantages in relation to the known conventional prior art constructions, such as: the possibility of winding the copper wire that forms the coil in conventional machines; the achievement of high amounts of windings of the copper wire of the coil; complying with the requirements of the electrical insulation of said coil, according to the international electric safety rules, with the electrical insulation being effected by a conventional process; and the reliability of the fixation of the copper windings of the coil as a whole.

Advantageous embodiments of the invention are set forth in the dependent claims.

### Brief Description of the Drawings

The invention will be described below, with reference to the enclosed drawings, in which:
Figure 1 is a longitudinal sectional view of a linear motor, showing a known stator construction of the prior art, having an annular stack of laminations formed with single piece laminations;
Figure 2 is a lateral view of a single piece lamination of the type used in the annular stack of laminations illustrated in figure 1;
Figure 3 is a lateral view of two lamination portions of an annular stack of laminations formed according to the present invention;
Figure 4 is a perspective view of an annular alignment of a lamination portion of the lamination stack to be formed according to the present invention;
Figure 5 is a perspective view of a reel for the formation of the coil, being mounted before placing it in the stator of the present invention;
Figure 6 is a perspective view of the reel for the formation of the coil, electrically insulated and provided with contact terminals, before placing it in the stator of the present invention;
Figure 7 is a perspective view of the coil mounted to an annular alignment of one of the lamination portions for the formation of the stack of laminations of the present invention; and
Figure 8 is a perspective view of the coil mounted between two annular alignments of lamination portions for the formation of the lamination stack of the present invention;

### Description of the Illustrated Embodiment

The present invention is applied to the formation of the stator of a linear electric motor, which is generally used in a hermetic compressor of refrigeration systems, said compressor comprising, inside a shell (not illustrated): a motor-compressor assembly including a non-resonant assembly formed by a linear motor and a cylinder 1, and a resonant assembly formed by a piston 2 reciprocating inside the cylinder 1, and an actuating means 3, external to the cylinder 1 and which carries a magnet 4 axially impelled upon energization of the linear motor, said actuating means 3 operatively coupling the piston 2 to the linear motor.

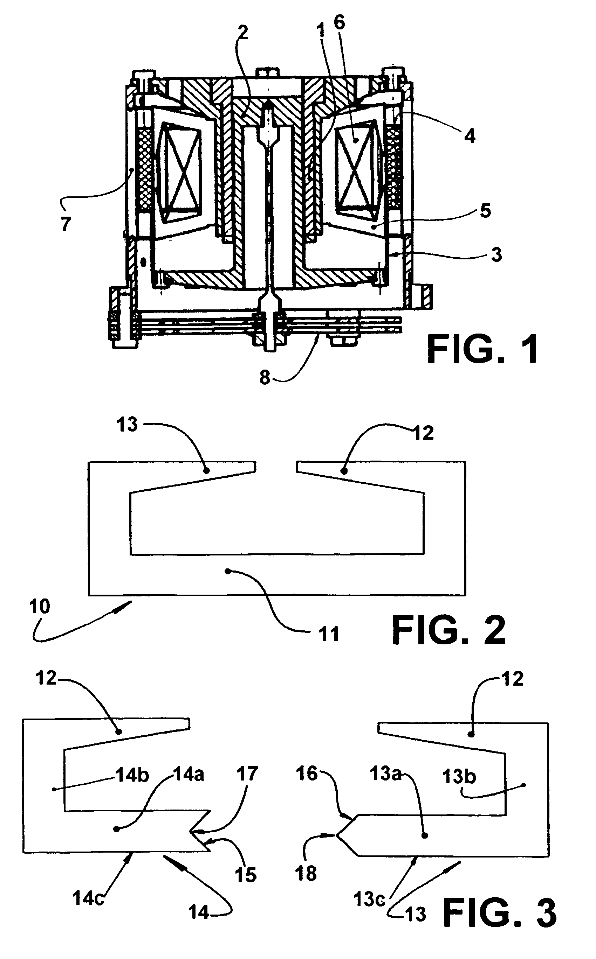

As illustrated in the enclosed figure 1, the linear motor is mounted around the cylinder 1 and the piston 2, and comprises therewithin an annular stack 5, which is formed by a plurality of metallic lamination elements 10 laterally seated in relation to each other, and in which annular stack 5 is mounted a tubular coil 6 and an external annular stack 7 formed by a plurality of external metallic laminations.

The internal and external annular stacks are each formed by the mutual lateral seating of the metallic laminations, generally made of steel, and which form said stack, defining a cylindrical internal surface for mounting, for example the internal annular stack 5, around the cylinder 1.

The external annular stack 7 forms with the stator an annular space, inside which moves the actuating means 3, whose function is to produce the linear movement of the piston 2 inside the cylinder 1.

The compressor also includes conventional resonant spring means 8, which are mounted constantly compressing the resonant assembly and the non-resonant assembly and which are resiliently and axially deformed toward the displacement direction of the piston 2.

Each lamination element 10 presents an internal axial extension 11 and two radial end extensions 12 defining, as illustrated, a trapezoidal profile for the lamination element 10, with the smallest base coinciding with the internal axial extension 11.

According to the present invention, each lamination element 10 is defined by two lamination portions 13, 14, at least one of them having at least part of the internal axial extension 11 of the respective lamination element 10, said lamination portions 13, 14 being affixed to each other during the formation of the stator to complete the respective lamination element 10, as described below.

According to a constructive form as illustrated, each lamination element 10 presents a respective lamination portion 13, 14 having its respective internal axial extension 13a, 14a carrying a corresponding radial extension 13b, 14b.

For the fixation of the lamination portions to each other, in order to form each lamination element 10, said lamination portions are seated to each other through a respective seating region 15, 16, for example by fitting said seating regions 15, 16 to each other, one of which presenting a recess 17 to be fitted in a complementary projection 18 provided in the other seating region 15, 16 upon the assembly of the annular stack of lamination elements 5, as described below.

According to the present invention, each lamination portion 13, 14 presents a respective radially internal edge 13c, 14c to be mutually laterally seated side by side with a radially internal edge 13c, 14c of an adjacent lamination portion 13, 14 defining a rectilinear alignment of each plurality of lamination portions 13, 14.

After the rectilinear alignment of each plurality of lamination portions 13, 14, the latter are affixed to each other, so as to allow only the related limited angular displacement of each said lamination portion 13 14 to occur around a rotation shaft coinciding with the respective radially internal edge 13c, 14c.

After the fixation of the lamination portions 13, 14 in a rectilinear alignment, the latter are conducted to a step of deforming said alignment to an annular configuration, until an end lamination portion 13, 14 of each respective alignment of a plurality of lamination portions 13, 14, is seated against another opposite end lamination portion 13, 14, of said plurality of laminations. This deformation makes the radially internal edges 13c, 14c to define an internal cylindrical surface for the respective annular assembly 20, 30, said annular assemblies 20, 30 being complementary to each other in the formation of the annular stack of lamination elements 5. The internal cylindrical surface of each annular assembly is defined so as to present a previously calculated diameter for the annular stack of lamination elements 5 to be formed, as a function of the dimensioning of the region for the mounting of said stack in the electric motor.

According to the present invention, after forming each annular assembly 20, 30, each of the latter receives a respective end portion of the tubular coil 6, to allow the complementary seating regions 15, 16 to be seated and affixed to each other, completing the form of the annular stack of lamination elements 5.

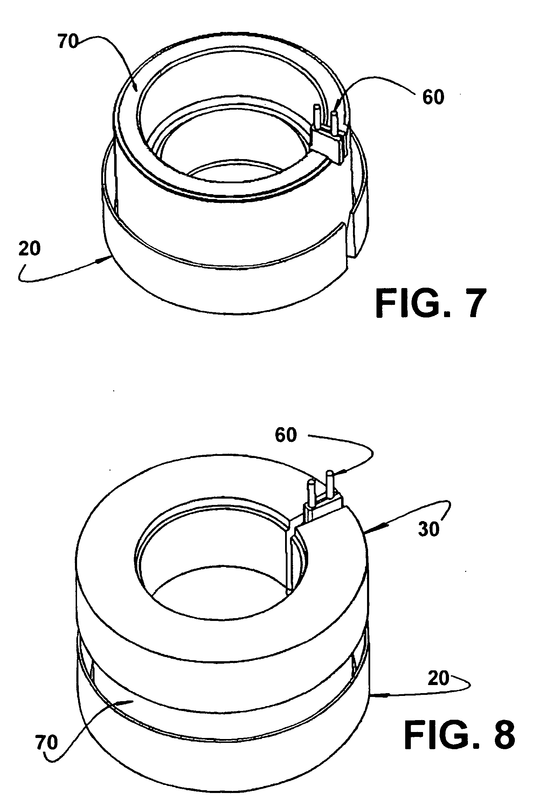

In the embodiment of the present invention illustrated in figure 8, an end portion of the tubular coil 6 is first seated in the interior of one of the annular assemblies 20, 30, before mounting it to the other end portion of said tubular coil 6 of the other annular assembly 20, 30. In another embodiment, each annular assembly 20, 30 is simultaneously seated to an adjacent end portion of the tubular coil 6.

According to one way of carrying out the present invention, the fixation of the two annular assemblies 20, 30 to each other for the formation of the annular stack of lamination elements 5 is effected by providing an adhesive bead (not illustrated) in the seating region 15, 16 of at least one of the pluralities of lamination portions 13, 14 that form each annular assembly 20, 30, said adhesive being cured under tension, for example.

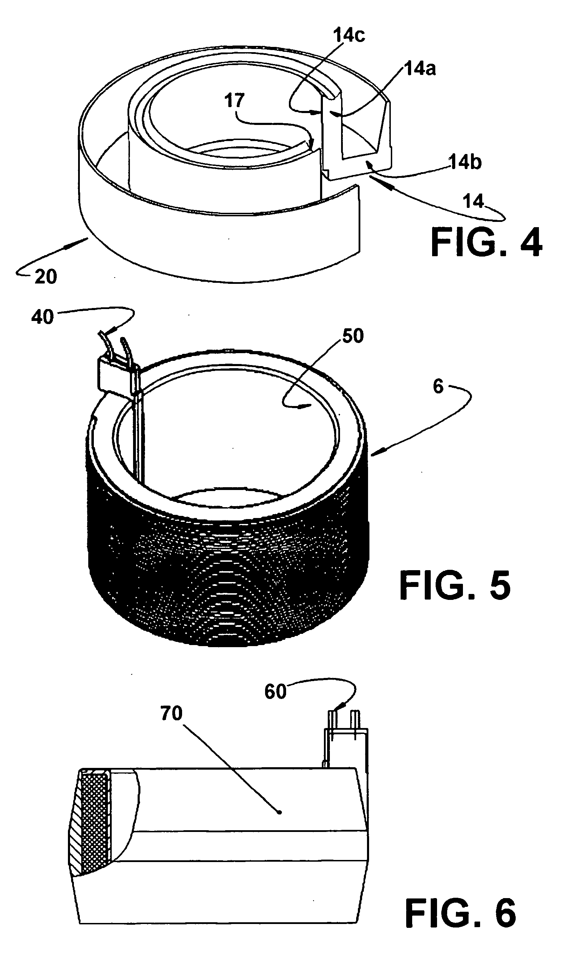

As a function of the construction of the stator of the present invention, the tubular coil 6 can be obtained prior to placing it inside the annular stack of lamination elements 5, by winding each copper wire 40 in a reel 50, made of plastic, for example (figure 5) and which presents means to provide the insulation of the ends of the wire that forms the coil. At the end of the wire winding operation, the connection of said ends to conducts 60 is effected, for example by welding and said conducts operate, for example to connect the tubular coil 6 to a power supply cable, not illustrated. In the present construction, the assembly defined by the wound copper wire 40 and the reel 50 receives an insulating cover 70, for example made of injected plastic material (figure 6), to guarantee the complete insulation of the coil from the ferromagnetic structure of the electric motor. The assembly formed by the wound copper wire 40, reel 50, and insulating cover 70 defines the tubular coil 6 that will be placed and affixed, for example by an adhesive, between the annular assemblies 20, 30 (figure 8).

## Claims

1. A process for forming the stator of a linear electric motor, said stator comprising an annular stack of lamination elements (5) seated laterally to each other, each lamination element (5) having an internal axial extension (11) and two end radial extensions (12), and in which annular stack is mounted a tubular coil (6), said process comprising the steps of:
a- providing lamination elements (10), each defined by two lamination portions (13, 14) to be affixed to each other to complete the respective lamination element (10), at least one of said lamination portions (13, 14) having at least part of the internal axial extension (11) of the respective lamination element (10);
b- providing a rectilinear alignment of each of a plurality of lamination portions (13, 14) presenting a radially internal axial edge (13c, 14c), said lamination portions (13, 14) being laterally mutually seated, with their respective radially internal axial edges (13c, 14c) defining a flat surface;
c- affixing to each other the radially internal axial edges (13c, 14c) of the lamination portions (13, 14) of the rectilinear alignment of each plurality of lamination portions (13, 14), to allow only the relative limited angular displacement of each lamination portion (13, 14) around its part of the radially internal axial edge (13c, 14c);
d- deforming the alignment of each plurality of lamination portions (13, 14) affixed to each other to an annular shape, with the respective radially internal axial edges (13c, 14c) defining an internal cylindrical surface of the respective annular assembly (20, 30);
e- forming two mutually complementary annular assemblies (20, 30), with the lamination portions (13, 14) of each annular assembly (20, 30) being seated side by side in relation to each other; and
f- seating in the interior of each of said annular assemblies (20, 30) a respective adjacent end portion of the tubular coil (6), affixing the two annular assemblies (20, 30) to each other to complete the shape of the annular stack of lamination elements (5).

2. The process according to claim 1, **characterized in that** in step "f" the two annular assemblies (20, 30) of lamination elements (10) are affixed to each other in seating regions (15, 16) with mutual fitting.

3. The process according to claim 1, **characterized in that** the mutual fixation of the lamination portions (13, 14) is obtained with the step of providing an adhesive to the seating region (15, 16) with the mutual fitting of at least one of the annular assemblies (20, 30).

4. The process according to claim 3, **characterized in that** it comprises the further step of submitting the adhesive to cure under tension, mutually affixing the lamination portions (13, 14) of the two annular assemblies (20, 30).

5. The process according to claim 3, **characterized in that**, in step "a", one of the lamination portions (13, 14) of each lamination element (10) is provided with a recess (17) in the seating region (15, 16) for the other lamination portion (13, 14), which is provided in the respective seating region (15, 16) with a complementary projection (18) to be fitted in said recess (17) upon the fixation of the two annular assemblies (20, 30).

6. The process according to claim 1, **characterized in that** step "f" comprises the additional steps of:
- seating a respective end portion of the tubular coil (6) in the interior of one of said annular assemblies (20, 30); and
- mounting the other of said annular assemblies (20, 30) to the remainder of the tubular coil (6), affixing the two annular assemblies (20, 30) to each other, to complete the shape of the annular stack of lamination elements (5).

7. The process according to claim 1, **characterized in that** it includes a further step of providing the tubular coil (6) with an insulating cover (70).

8. The process according to claim 7, **characterized in that** the insulating cover (70) is injected around the tubular coil (6).

9. The process according to claim 1, **characterized in that** the tubular coil (6) is affixed between the annular assemblies (20, 30).

10. The process according to claim 9, **characterized in that** the tubular coil (6) is affixed by adhesive to the annular assemblies (20, 30).

11. An annular stack of lamination elements of the type for forming the stator of a linear electric motor and comprising a plurality of lamination elements (10) seated laterally to each other, each lamination element (10) having an internal axial extension (11) and two end radial extensions (12), and in which annular stack is mounted a tubular coil (6), wherein each lamination element (10) is defined by two lamination portions (13, 14) to be affixed to each other, to complete the respective lamination element (10), at least one of said lamination portions (13, 14) having at least part of the internal axial extension (11) of the respective lamination element and one of the end radial extensions (12), **characterized in that** each lamination portion (13, 14) presenting a respective radially internal edge (13c, 14c) to be mutually laterally seated side by side with a radially internal edge (13c, 14c) of an adjacent lamination portion (13, 14) defining a rectilinear alignment of each plurality of lamination portions (13, 14).

12. The lamination stack according to claim 11, **characterized in that** each lamination portion (13, 14) presents a respective seating region (15, 16) for the mutual fitting to the other lamination portion (13, 14) upon the fixation of two annular assemblies (20, 30) to each other.

13. The lamination stack according to claim 12, **characterized in that** one of the lamination portions (13, 14) of each lamination element (10) presents a recess (17) in the respective seating region (13c, 14c) for the fitting of a complementary projection (18) provided in another lamination portion (13, 14), to complete the respective lamination element (10) upon the fixation of two annular assemblies (20, 30) to each other.

## Patentansprüche

1. Verfahren zum Ausbilden des Stators eines elektrischen Linearmotors, wobei der Stator eine ringförmige Schichtanordnung von Schichtelementen (5) umfaßt, die seitlich aneinander sitzen, wobei jedes Schichtelement (5) einen inneren axialen Fortsatz (11) und zwei radiale Endfortsätze (12) aufweist, und wobei in der ringförmigen Schichtanordnung eine rohrförmige Spule (6) montiert ist und das Verfahren die Schritte umfaßt:
a- Bereitstellen von Schichtelementen (10), deren jedes durch zwei Schichtabschnitte (13, 14) festgelegt ist, welche aneinander zu befestigen sind, um das jeweilige Schichtelement (10) zu vervollständigen, wobei mindestens einer der Schichtabschnitte (13, 14) zumindest einen Teil des inneren axialen Fortsatzes (11) des jeweiligen Schichtelementes (10) aufweist,
b- Bereitstellen einer geradlinigen Anordnung jedes einer Vielzahl von Schichtabschnitten (13, 14) mit einem radial inneren Axialrand (13c, 14c), wobei die Schichtabschnitte (13, 14) seitlich aneinander sitzen und ihre jeweiligen radial inneren Axialränder (13c, 14c) eine ebene Oberfläche festlegen,
c- Befestigen der radial inneren Axialränder (13c, 14c) der Schichtabschnitte (13, 14) der geradlinigen Anordnung jeder Vielzahl von Schichtabschnitten (13, 14) aneinander, um nur die relative, begrenzte Winkelverschiebung jedes Schichtabschnittes (13, 14) um seinen Teil des radial inneren Axialrandes (13c, 14c) zuzulassen;
d- Verformen der Anordnung jeder Vielzahl von aneinander befestigten Schichtabschnitten (13, 14) zu einer Ringform, wobei die jeweiligen radial inneren Axialränder (13c, 14c) eine innere Zylinderfläche der jeweiligen ringförmigen Anordnung (20, 30) festlegen;
e- Ausbilden zweier zueinander komplementärer, ringförmiger Anordnungen (20, 30), wobei die Schichtabschnitte (13, 14) jeder ringförmigen Anordnung (20, 30) seitlich aneinander sitzen, und
f- Einsetzen eines entsprechenden benachbarten Endabschnittes der rohrförmigen Spule (6) in das Innere jeder der ringförmigen Anordnungen (20, 30), Befestigen der beiden ringförmigen Anordnungen (20, 30) aneinander, um die Form der ringförmigen Schichtanordnung von Schichtelementen (5) zu vervollständigen.

2. Verfahren nach Anspruch 1, **dadurch gekennzeichnet, daß** im Schritt "f" die beiden ringförmigen Anordnungen (20, 30) von Schichtelementen (10) in Sitzbereichen (15, 16) mit gegenseitigem Eingriff aneinander befestigt werden.

3. Verfahren nach Anspruch 1, **dadurch gekennzeichnet, daß** die gegenseitige Befestigung der Schichtabschnitte (13, 14) durch den Schritt des Bereitstellen eines Klebemittels am Sitzbereich (15, 16) bei gegenseitigem Eingriff mindestens einer der ringförmigen Anordnungen (20, 30) erhalten wird.

4. Verfahren nach Anspruch 3, **dadurch gekennzeichnet, daß** es den weiteren Schritt des Aushärtens des Klebemittels unter Spannung umfaßt, wodurch die Schichtabschnitte (13, 14) der beiden ringförmigen Anordnungen (20, 30) aneinander befestigt werden.

5. Verfahren nach Anspruch 3, **dadurch gekennzeichnet, daß** im Schritt "a" einer der Schichtabschnitte (13, 14) jedes Schichtelementes (10) mit einer Ausnehmung (17) im Sitzbereich (15, 16) für den anderen Schichtabschnitt (13, 14) versehen ist, der im entsprechenden Sitzbereich (15, 16) mit einem komplementären Vorsprung (18) zum Eingriff in die Ausnehmung (17) bei Befestigung der beiden ringförmigen Anordnungen (20, 30) versehen ist.

6. Verfahren nach Anspruch 1, **dadurch gekennzeichnet, daß** der Schritt "P` die zusätzlichen Schritte umfaßt:
- Einsetzen eines entsprechenden Endabschnittes der rohrförmigen Spule (6) in das Innere einer der ringförmigen Anordnungen (20, 30), und
- Montieren der anderen der ringförmigen Anordnungen (20, 30) am Rest der rohrförmigen Spule (6), wobei die beiden ringförmigen Anordnungen (20, 30) aneinander befestigt werden, um die Form der ringförmigen Schichtanordnung von Schichtelementen (5) zu vervollständigen.

7. Verfahren nach Anspruch 1, **dadurch gekennzeichnet, daß** es einen weiteren Schritt zum Versehen der rohrförmigen Spule (6) mit einem isolierenden Überzug (70) umfaßt.

8. Verfahren nach Anspruch 7, **dadurch gekennzeichnet, daß** der isolierende Überzug (70) um die rohrförmige Spule (6) herum eingespritzt wird.

9. Verfahren nach Anspruch 1, **dadurch gekennzeichnet, daß** die rohrförmige Spule (6) zwischen den ringförmigen Anordnungen (20, 30) befestigt wird.

10. Verfahren nach Anspruch 9, **dadurch gekennzeichnet, daß** die rohrförmige Spule (6) mit einem Klebemittel an den ringförmigen Anordnungen (20, 30) befestigt wird.

11. Ringförmige Schichtanordnung von Schichtelementen der Art zum Ausbilden des Stators eines elektrischen Linearmotors, mit einer Vielzahl von Schichtelementen (10), die seitlich aneinander sitzen, wobei jedes Schichtelement (10) einen inneren axialen Fortsatz (11) und zwei radiale Endfortsätze (12) aufweist, und wobei in der ringförmigen Schichtanordnung eine rohrförmige Spule (6) montiert ist, wobei jedes Schichtelement (10) durch zwei Schichtabschnitte (13, 14) festgelegt ist, die aneinander zu befestigen sind, um das jeweilige Schichtelement (10) zu vervollständigen, und mindestens einer der Schichtabschnitte (13, 14) zumindest einen Teil des inneren axialen Fortsatzes (11) des entsprechenden Schichtelementes und einen der radialen Endfortsätze (12) aufweist, **dadurch gekennzeichnet, daß** jeder Schichtabschnitt (13, 14) einen entsprechenden radialen Innenrand (13c, 14c) zum gegenseitigen seitlichen Aneinandersetzen mit einem radialen Innenrand (13c, 14c) eines benachbarten Schichtabschnittes (13, 14) aufweist, der eine geradlinige Anordnung jeder Vielzahl von Schichtabschnitten (13, 14) festlegt.

12. Schichtanordnung nach Anspruch 11, **dadurch gekennzeichnet, daß** jeder Schichtabschnitt (13, 14) einen entsprechenden Sitzbereich (15, 16) für den gegenseitigen Eingriff mit dem anderen Schichtabschnitt (13, 14) bei Befestigung zweier ringförmiger Anordnungen (20, 30) aneinander aufweist.

13. Schichtanordnung nach Anspruch 12, **dadurch gekennzeichnet, daß** einer der Schichtabschnitte (13, 14) jedes Schichtelementes (10) eine Ausnehmung (17) im entsprechenden Sitzbereich (13c, 14c) für den Eingriff eines komplementären Vorsprungs (18) aufweist, der in einem anderen Schichtabschnitt (13, 14) vorgesehen ist, um das entsprechende Schichtelement (10) bei Befestigung zweier ringförmiger Anordnungen (20, 30) aneinander zu vervollständigen.

## Revendications

1. Procédé pour former le stator d'un moteur électrique linéaire, ledit stator comprenant une pile annulaire d'éléments en tôle (5) posés latéralement les uns par rapport aux autres, chaque élément en tôle (5) ayant une extension axiale interne (11) et deux extensions radiales d'extrémité (12), et dans laquelle pile annulaire est montée une bobine tubulaire (6), ledit procédé comprenant les étapes consistant à :
a- fournir des éléments en tôle (10), définis chacun par deux parties en tôle (13, 14) devant être fixées l'une à l'autre pour obtenir l'élément en tôle (10) respectif, au moins l'une desdites parties en tôle (13, 14) ayant au moins une partie de l'extension axiale interne (11) de l'élément en tôle (10) respectif ;
b- réaliser un alignement rectiligne de chacune d'une pluralité de parties en tôle (13, 14) présentant un bord axial radialement interne (13c, 14c), lesdites parties en tôle (13, 14) étant posées mutuellement latéralement, leurs bords axiaux radialement internes (13c, 14c) respectifs définissant une surface plane ;
c- fixer l'un à l'autre les bords axiaux radialement internes (13c, 14c) des parties en tôle (13, 14) de l'alignement rectiligne de chaque pluralité de parties en tôle (13, 14), pour permettre seulement le déplacement angulaire limité relatif de chaque partie en tôle (13, 14) autour de sa partie du bord axial radialement interne (13c, 14c) ;
d- déformer l'alignement de chaque pluralité de parties en tôle (13, 14) fixées les unes aux autres en une forme annulaire, leur bords axiaux radialement internes (13c, 14c) respectifs définissant une surface cylindrique interne de l'ensemble annulaire (20, 30) respectif ;
e- former deux ensembles annulaires mutuellement complémentaires (20, 30), les parties en tôle (13, 14) de chaque ensemble annulaire (20, 30) étant posées côte à côte l'une par rapport à l'autre ; et
f- poser à l'intérieur de chacun desdits ensembles annulaires (20, 30) une partie d'extrémité adjacente respective de la bobine tubulaire (6), en fixant les deux ensembles annulaires (20, 30) l'un à l'autre pour obtenir la forme de la pile annulaire d'éléments en tôle (5).

2. Procédé selon la revendication 1,
**caractérisé en ce que**, dans l'étape « f », les deux ensembles annulaires (20, 30) d'éléments en tôle (10) sont fixés l'un à l'autre dans des régions d'appui (15, 16) avec un emboîtement mutuel.

3. Procédé selon la revendication 1,
**caractérisé en ce que** la fixation mutuelle des parties en tôle (13, 14) est obtenue avec l'étape consistant à prévoir un adhésif sur la région d'appui (15, 16) avec l'emboîtement mutuel d'au moins l'un des ensembles annulaires (20, 30).

4. Procédé selon la revendication 3,
**caractérisé en ce qu'**il comprend l'étape supplémentaire consistant à soumettre l'adhésif à un durcissement sous tension, en fixant mutuellement les parties en tôle (13, 14) des deux ensembles annulaires (20, 30).

5. Procédé selon la revendication 3,
**caractérisé en ce que**, dans l'étape « a », l'une des parties en tôle (13, 14) de chaque élément en tôle (10) est pourvue d'un évidement (17) dans la région d'appui (15, 16) pour l'autre partie en tôle (13, 14), laquelle est pourvue dans la région d'appui (15, 16) respective d'une saillie complémentaire (18) devant être emboîtée dans ledit évidement (17) lors de la fixation des deux ensembles annulaires (20, 30).

6. Procédé selon la revendication 1,
**caractérisé en ce que** l'étape « f » comprend les étapes supplémentaires consistant à :
- poser une partie d'extrémité respective de la bobine tubulaire (6) à l'intérieur de l'un desdits ensembles annulaires (20, 30) ; et
- monter l'autre desdits ensembles annulaires (20, 30) sur le reste de la bobine tubulaire (6), en fixant les deux ensembles annulaires (20, 30) l'un à l'autre, pour obtenir la forme de la pile annulaire d'éléments en tôle (5).

7. Procédé selon la revendication 1,
**caractérisé en ce qu'**il inclut une étape supplémentaire consistant à munir la bobine tubulaire (6) d'un couvercle isolant (70).

8. Procédé selon la revendication 7,
**caractérisé en ce que** le couvercle isolant (70) est injecté autour de la bobine tubulaire (6).

9. Procédé selon la revendication 1,
**caractérisé en ce que** la bobine tubulaire (6) est fixée entre les ensembles annulaires (20, 30).

10. Procédé selon la revendication 9,
**caractérisé en ce que** la bobine tubulaire (6) est fixée par un adhésif sur les ensembles annulaires (20, 30).

11. Pile annulaire d'éléments en tôle du type destiné à former le stator d'un moteur électrique linéaire et comprenant une pluralité d'éléments en tôle (10) posés latéralement les uns par rapport aux autres, chaque élément en tôle (10) ayant une extension axiale interne (11) et deux extensions radiales d'extrémité (12), et dans laquelle pile annulaire est montée une bobine tubulaire (6), chaque élément en tôle (10) étant défini par deux parties en tôle (13, 14) devant être fixées l'une à l'autre, pour obtenir l'élément en tôle (10) respectif, au moins l'une desdites parties en tôle (13, 14) ayant au moins une partie de l'extension axiale interne (11) de l'élément en tôle respectif et l'une des extensions radiales d'extrémité (12),
**caractérisée en ce que** chaque partie en tôle (13, 14) présente un bord radialement interne (13c, 14c) respectif destiné à être posé mutuellement latéralement côte à côte avec un bord radialement interne (13c, 14c) d'une partie en tôle (13, 14) adjacente définissant un alignement rectiligne de chaque pluralité de parties en tôle (13, 14).

12. Pile d'éléments en tôle selon la revendication 11,
**caractérisée en ce que** chaque partie en tôle (13, 14) présente une région d'appui (15, 16) respective pour l'emboîtement mutuel sur l'autre partie en tôle (13, 14) lors de la fixation de deux ensembles annulaires (20, 30) l'un sur l'autre.

13. Pile d'éléments en tôle selon la revendication 1 2,
**caractérisée en ce que** l'une des parties en tôle (13, 14) de chaque élément en tôle (10) présente un évidement (17) dans la région d'appui (13c, 14c) respective pour l'emboîtement d'une saillie complémentaire (18) prévue dans une autre partie en tôle (13, 14), pour obtenir l'élément en tôle (10) respectif lors de la fixation des deux ensembles annulaires (20, 30) l'un sur l'autre.
